# EUROPÄISCHE PATENTSCHRIFT

(11) **EP 4 636 259 B1**
(45) Veröffentlichungstag und Bekanntmachung des Hinweises auf die Patenterteilung: **28.10.2026**
(21) Anmeldenummer: 25169114.3
(22) Anmeldetag: 08.04.2025
(51) Int. Cl.: F15B 11/068, F15B 13/08, F15B 19/00, F15B 20/00, F15B 13/04

(54) **VENTILANORDNUNG**
VALVE ASSEMBLY
AGENCEMENT DE SOUPAPE

(30) Priorität: 19.04.2024 DE 102024111081
(43) Veröffentlichungstag der Anmeldung: 22.10.2025
(73) Patentinhaber: Festo SE & Co. KG, 73734 Esslingen (DE)
(72) Erfinder: Usinger, Eduard, 73773 Aichwald (DE); Wenske, Eduard, 70806 Kornwestheim (DE)
(74) Vertreter: Patentanwälte Magenbauer & Kollegen Partnerschaft mbB

(56) Entgegenhaltungen:
- DE-A1- 3 043 346
- DE-B4- 102013 016 652
- DE-U1- 8 806 193
- US-A1- 2021 041 035

## Beschreibung

Die Erfindung betrifft eine Ventilanordnung zur Bereitstellung von Druckluft an Druckluftverbraucher, mit mehreren längs einer Aufreihungsrichtung aneinander gereihten Funktionsmodulen.

DE 88 06 193 U1 offenbart eine bekannte Ventilanordnung zur Bereitstellung von Druckluft an Druckluftverbraucher.

Die Aufgabe der Erfindung besteht darin, ein Ventilanordnung bereitzustellen, mit der unterschiedliche sicherheitsgerichtete Funktionen verwirklicht werden können.

Diese Aufgabe wird dadurch gelöst, dass die Ventilanordnung der eingangs genannten Art mehrere längs einer Aufreihungsrichtung aneinander gereihte Funktionsmodule aus der Gruppe: Ventilscheibengruppe, Sicherheitsventilgruppe, Drosselventil, aufweist, wobei die Ventilscheibengruppe eine oder mehrere Ventilscheiben umfasst und wobei jede Ventilscheibe wenigstens ein elektrisch ansteuerbares Ventil aufweist, das mit einem elektrischen Versorgungsstrang, der die Ventilscheibengruppe durchsetzt, und mit einem Fluidversorgungsstrang, der die Ventilscheibengruppe durchsetzt, verbunden ist, wobei das Drosselventil stromauf von der Sicherheitsventilgruppe zwischen einem Fluidanschluss und dem Fluidversorgungsstrang der Ventilscheibengruppe angeordnet ist und für eine zeitweilige Reduzierung eines Arbeitsdrucks im Fluidversorgungsstrang ausgebildet ist, wobei die Sicherheitsventilgruppe ein erstes Sicherheitsventil und ein zweites Sicherheitsventil aufweist, die jeweils zur Beeinflussung eines Fluidstroms zwischen dem Fluidanschluss und dem Fluidversorgungsstrang ausgebildet sind, wobei eine elektrisch zwischen einer Ventilsteuerung und der Sicherheitsventilgruppe angeordnete Sicherheitssteuerung für eine sicherheitsgerichtete Blockierung von elektrischen Ansteuersignalen für das erste Sicherheitsventil und das zweite Sicherheitsventil ausgebildet ist, wobei die Ventilsteuerung für eine elektrische Ansteuerung der Ventilscheibengruppe und der Sicherheitsventilgruppe ausgebildet ist.

Eine solche Ventilanordnung wird beispielsweise im Bereich der industriellen Automatisierungstechnik eingesetzt und dient dazu, einen oder mehrere Druckluftverbraucher in gezielter Weise mit Druckluft zu versorgen Und sicher zu Entlüften. Bei dem Druckluftverbraucher kann es sich beispielsweise um einen Pneumatikzylinder, einen Schwenkantrieb, eine Bremseinrichtung oder um eine andere Komponente handeln, mit der eine Umsetzung von Druckenergie in eine Bewegung durchgeführt wird. In Abhängigkeit von der Ausführung des Druckluftverbrauchers und vom Einsatzgebiet für den Druckluftverbraucher kann ein Bedarf vorliegen, den Druckluftverbraucher rasch und zuverlässig in einen Ruhezustand, vorzugsweise in einen energielosen Zustand, zu bringen. Dies kann beispielsweise dann der Fall sein, wenn eine Maschine oder Anlage, in der die Ventilanordnung und der Druckluftverbraucher eingesetzt werden, aus einem regulären Betriebszustand in einen unsicheren Zustand gerät. Eine solche Zustandsänderung kann beispielsweise dann auftreten, wenn ein Benutzer während des Betriebs der Maschine oder Anlage in eine Sicherheitszone eingreift oder eintritt, die um die Maschine oder Anlage errichtet wurde. Die Sicherheitszone kann beispielsweise durch einen Sicherheitszaun und/oder durch eine Lichtschrankenanordnung begrenzt sein.

Die für einen derartigen Fall vorgesehene Überführung des Druckluftverbrauchers in den Ruhezustand wird bevorzugt dadurch erzielt, dass die Druckversorgung für den Druckluftverbraucher unterbrochen wird. Besonders bevorzugt kann vorgesehen sein, dass der Druckluftverbraucher in einen energielosen Zustand überführt wird, hierzu wird eine Entlüftung des Druckluftverbrauchers durchgeführt. Um den Ruhezustand und insbesondere den energielosen Zustand zu erreichen, umfasst die Ventilanordnung eine Sicherheitsteuerung und eine Sicherheitsventilgruppe, mit denen die Abschaltung der Druckversorgung und gegebenenfalls zusätzlich die Entlüftung des Druckluftverbrauchers verwirklicht werden kann.

Die Sicherheitssteuerung ist als elektrische oder elektronische Steuerung ausgebildet und kann beispielsweise elektrisch mit einem Türkontaktschalter eines Sicherheitszauns oder mit einer Sicherheitslichtschranke verbunden sein und dient dazu, im Fall einer unvorhergesehenen Auslösung des Türkontaktschalters oder der Sicherheitslichtschranke eine Ansteuerung der Sicherheitsventilgruppe vorzunehmen. Die Sicherheitssteuerung kann auch mit anderen sicherheitsgerichteten Komponenten wie beispielsweise einem Nothaltschalter elektrisch verbunden sein.

Die Sicherheitsventilgruppe umfasst ein elektrisch ansteuerbares erstes Sicherheitsventil und ein elektrisch ansteuerbares zweites Sicherheitsventil, die für eine Entlüftung des Fluidversorgungsstrangs fluidisch parallelgeschaltet sind. Dies bedeutet, dass sowohl allein mit dem ersten Sicherheitsventil als auch allein mit dem zweiten Sicherheitsventil die gewünschte Blockierung der Druckluftversorgung und die Entlüftung des Fluidversorgungsstrangs und somit des wenigstens einen an der Ventilanordnung angeschlossenen Druckluftverbrauchers realisiert werden kann. Sowohl das erste Sicherheitsventil als auch das zweite Sicherheitsventil sind elektrisch mit der Sicherheitsteuerung verbunden. Die Sicherheitssteuerung ist elektrisch in Reihe mit der Ventilsteuerung geschaltet, wobei die Ventilsteuerung für eine Bereitstellung von elektrischen Ansteuersignalen für die Sicherheitsventile ausgebildet ist und die Aufgabe der Sicherheitsteuerung darin besteht, diese elektrischen Ansteuersignale im Sicherheitsfall zu blockieren. Durch die Ansteuersignale der Ventilsteuerung können die Sicherheitsventile unter der Voraussetzung, dass die Sicherheitsteuerung keine Blockierung dieser Ansteuersignale vornimmt, zwischen einer zweiten Funktionsstellung, in der keine Blockierung der Druckluftversorgung und/oder keine Entlüftung des Druckluftverbrauchers durch die Sicherheitsventilgruppe vorliegt, und einer ersten Funktionsstellung, in der eine Blockierung der Druckluftversorgung und/oder eine Entlüftung des Druckluftverbraucher durch die Sicherheitsventilgruppe vorliegt, umgeschaltet werden. Durch die Parallelschaltung des ersten Sicherheitsventils und des zweiten Sicherheitsventils für den Entlüftungsfall wird eine Redundanz für die Entlüftung des Druckluftverbrauchers verwirklicht, sodass in einem ersten Fehlerfall, in dem beispielsweise das erste Sicherheitsventil eine Fehlfunktion aufweist, dennoch die sicherheitsgerichtete Blockierung der Druckluftversorgung für den Druckluftverbraucher und/oder die Entlüftung des Druckluftverbrauchers gewährleistet ist. Für die zweite Funktionsstellung der Sicherheitsventile, in der eine Druckluftversorgung für den Fluidversorgungsstrang und den wenigstens einen an die Ventilanordnung angeschlossenen Druckluftverbraucher gewährleistet werden soll, ist vorzugsweise eine fluidische Reihenschaltung für die beiden Sicherheitsventile der Sicherheitsventilgruppe vorgesehen.

Die Sicherheitsventilgruppe ist als Funktionsmodul der Ventilanordnung ausgebildet und für eine Aufreihung mit weiteren

Funktionsmodulen der Ventilanordnung zu einer kompakten Einheit, die auch als Ventilinsel bezeichnet werden kann, vorgesehen.

Die Sicherheitssteuerung kann als separate Komponente außerhalb der angereihten Funktionsmodule vorgesehen sein und über eine Verdrahtung, vorzugsweise über Kabelverbindungen, insbesondere über eine Busverbindung, elektrisch stromauf der Sicherheitsventilgruppe und der Ventilscheibengruppe eingebunden. Bevorzugt ist vorgesehen, dass die Sicherheitssteuerung ebenfalls als Funktionsmodul der Ventilanordnung ausgebildet ist und rein exemplarisch unmittelbar benachbart zur Sicherheitsventilgruppe oder beabstandet zur Sicherheitsventilgruppe in der Ventilanordnung angeordnet ist.

Vorzugsweise ist vorgesehen, dass die Funktionsmodule der Ventilanordnung zumindest im Wesentlichen quaderförmig ausgebildet sind und mit aneinander angrenzenden Seitenflächen längs einer Aufreihungsrichtung aneinander angereiht werden können.

Ferner umfasst die Ventilanordnung als Funktionsmodul eine Ventilscheibengruppe sowie eine vorzugsweise als weiteres Funktionsmodul ausgebildete Ventilsteuerung. Alternativ ist die Ventilsteuerung als separate Komponente außerhalb der angereihten Funktionsmodule vorgesehen sein und über eine Verdrahtung, vorzugsweise über Kabelverbindungen, insbesondere über eine Busverbindung, elektrisch zwischen die Ventilsteuerung und die Sicherheitsventilgruppe eingeschleift sein.

Die Ventilscheibengruppe umfasst eine oder mehrere, insbesondere gleichartig ausgebildete, Ventilscheiben, die jeweils wenigstens ein elektrisch ansteuerbares Ventil aufweisen. Mit dem elektrisch ansteuerbaren Ventil kann ein Fluidstrom durch einen Fluidkanal, der in der jeweiligen Ventilscheibe zwischen einem Eingangsanschluss und einem Ausgangsanschluss verläuft, beeinflusst werden. Beispielsweise ist das elektrisch ansteuerbare Ventil als Sitzventil oder Schieberventil ausgebildet und mit rein exemplarisch einem Magnetspulenantrieb oder einem piezoelektrischen Antrieb zur Bewegung eines im Fluidkanal angeordneten Ventilglieds ausgerüstet.

Jedes der elektrisch ansteuerbaren Ventile der Ventilscheiben ist mit einem elektrischen Versorgungsstrang, der sich durch die Ventilscheibengruppe erstreckt, verbunden. Der elektrische Versorgungsstrang erstreckt sich auch durch weitere Funktionsmodule der Ventilanordnung, vorzugsweise durch alle Funktionsmodule der Ventilanordnung, und gewährleistet eine elektrische Verbindung zwischen der Ventilscheibengruppe und der Ventilsteuerung. Beispielhaft ist vorgesehen, dass jedes der Funktionsmodule an einander entgegengesetzten Außenflächen mit einem Steckverbinder versehen ist, der für eine elektrische Kopplung mit einem benachbart angereihten Funktionsmodul ausgebildet ist und dass die Steckverbinder des jeweiligen Funktionsmoduls durch eine Kabelverbindung oder eine gedruckte Schaltung (Leiterplatte), elektrisch miteinander verbunden sind.

Die Ventilsteuerung ist als elektrische oder elektronische Steuerung zur elektrischen Ansteuerung der Ventilscheiben ausgebildet und kann beispielsweise mit einem Sensor oder mehreren Sensoren elektrisch verbunden sein, die Bestandteil der Maschine oder Anlage sind, der die Ventilanordnung zugeordnet sind. Ergänzend oder alternativ kann die Ventilsteuerung mit einer übergeordneten Steuerung verbunden sein. Die Aufgabe der Ventilsteuerung besteht darin, eine koordinierte Ansteuerung der Ventilscheiben vorzunehmen, um eine bestimmungsgemäße Funktion von Druckluftverbrauchern, die der Maschine oder Anlage zugeordnet sind, zu ermöglichen.

Ferner ist jedes der elektrisch ansteuerbaren Ventile der Ventilscheibengruppe mit einem Fluidversorgungsstrang verbunden, über den eine Zufuhr von Druckluft an das jeweilige elektrisch ansteuerbares Ventil und/oder eine Abfuhr von Druckluft von dem jeweiligen elektrisch ansteuerbaren Ventil erfolgen kann. Hierzu ist insbesondere vorgesehen, dass jede Ventilscheibe der Ventilscheibengruppe einen oder mehrere längs der Aufreihungsrichtung ausgerichtete Fluidkanäle umfasst, die an einander entgegengesetzten Außenflächen der jeweiligen Ventilscheibe ausmünden und für eine fluiddichte Ankopplung mit einer benachbart angeordneten Ventilscheibe ausgebildet sind. Diese Fluidkanäle bilden den Fluidversorgungsstrang und erstrecken sich vorzugsweise auch durch weitere Funktionsmodule der Ventilanordnung. Innerhalb der jeweiligen Ventilscheibe ist vorgesehen, dass eine fluidisch kommunizierende Verbindung zwischen dem Fluidversorgungsstrang und dem Eingangsanschluss des Fluidkanals, der die Ventilscheibe durchsetzt, vorliegt. Der Ausgangsanschluss der Ventilscheibe bildet typischerweise den Arbeitsanschluss, an dem der Druckluftverbraucher unmittelbar oder unter Zwischenschaltung einer starren oder flexiblen Fluidleitung, insbesondere eines Fluidschlauchs, angeschlossen werden kann.

Beispielhaft ist vorgesehen, dass der Fluidversorgungsstrang oder zumindest einzelne Fluidkanäle des Fluidversorgungsstrangs auch die Ventilsteuerung und/oder die Sicherheitssteuerung durchsetzen. In jedem Fall ist vorgesehen, dass sich der Fluidversorgungsstrang auch durch die Sicherheitsventilgruppe erstreckt, sodass eine fluidisch kommunizierende Verbindung zwischen der Ventilscheibengruppe und der Sicherheitsventilgruppe gewährleistet ist. Je nach Ausgestaltung der Sicherheitsventilgruppe und in Abhängigkeit von der Ausgestaltung des Fluidversorgungsstrangs kann somit die Blockierung der Druckluftversorgung für den oder die Druckluftverbraucher und/oder eine Entlüftung für den oder die Druckluftverbraucher vorgenommen werden.

Eine Zufuhr von Druckluft in die Ventilanordnung erfolgt an einem Fluidanschluss, wobei zwischen dem Fluidanschluss und der Sicherheitsventilanordnung ein Drosselventil angeordnet ist, mit dem eine zeitweilige Reduzierung des am Fluidanschluss vorliegenden Fluiddrucks für die Ventilanordnung erzielt wird. Die Zielsetzung für das Drosselventil besteht darin, bei einem Startvorgang für die Ventilanordnung und die damit verbundenen Druckluftverbraucher einen schlagartigen Druckanstieg in der Ventilanordnung und eventuell daraus resultierende, unerwünschte Bewegungen der Druckluftverbraucher zu vermeiden. Bevorzugt ist das Drosselventil dazu ausgebildet, nach Bereitstellung einer Druckluftversorgung für die Ventilanordnung einen langsamen Anstieg für den Arbeitsdruck oder für den Arbeitsdruck und den Steuerdruck in der Ventilanordnung zu gewährleisten. Beispielhaft ist vorgesehen, dass das Dosierventil als fluidische Parallelschaltung einer Drossel und einer Druckwaage ausgebildet ist, wobei die Druckwaage nach einer Druckbereitstellung am Fluidanschluss zunächst noch eine Sperrstellung einnimmt und erst zeitverzögert aus der Sperrstellung in eine Freigabestellung überführt wird. Diese Zeitverzögerung kann beispielsweise durch eine fluidische oder elektrische Zeitsteuerung oder durch eine fluidische Rückkopplung der Druckwaage mit einem über die Drossel fluidisch versorgten Abschnitt einer Versorgungsleitung verwirklicht werden. Beispielhaft ist vorgesehen, dass bei einem Startvorgang zunächst ein Fluidstrom ausschließlich durch die Drossel erfolgt, bis in der Ventilanordnung ein Steuerdruck und/oder ein Arbeitsdruck vorliegt, der rein exemplarisch 50 Prozent des für den bestimmungsgemäßen Gebrauch der Ventilanordnung vorgesehenen Steuerdrucks und/oder Arbeitsdrucks beträgt. Dementsprechend ist die Druckwaage derart eingestellt, dass eine Umschaltung zwischen der Sperrstellung und der Freigabestellung erst erfolgt, wenn in der Ventilanordnung das vorstehend genannte 50-Prozent-Druckniveau erreicht ist und dieses Druckniveau beispielsweise über eine Rückführleitung an die Druckwaage zur Verfügung gestellt wird.

Vorteilhafte Weiterbildungen der Erfindung sind Gegenstand der Unteransprüche.

Zweckmäßig ist es, wenn der Fluidversorgungsstrang einen Arbeitsluftkanal umfasst und wenn das Drosselventil für eine zeitweilige Reduzierung eines Arbeitsdrucks im Arbeitsluftkanal ausgebildet ist, wobei das erste Sicherheitsventil und das zweite Sicherheitsventil für eine redundante Beeinflussung eines Fluidstroms im Arbeitsluftkanal, insbesondere für eine Blockierung einer fluidisch kommunizierenden Verbindung zwischen dem Fluidanschluss und dem Arbeitsluftkanal sowie für eine Entlüftung des Arbeitsluftkanals, ausgebildet sind. Bei dieser Ausgestaltung des Fluidversorgungsstrangs und der Sicherheitsventilgruppe wird die sicherheitsgerichtete Abschaltung des Druckluftverbrauchers dadurch erzielt, dass die Sicherheitsventilgruppe sowohl eine Blockierung der Druckluftzufuhr zwischen dem Fluidanschluss und dem Arbeitsluftkanal als auch eine Entlüftung des Arbeitsluftkanals vornimmt. Hierzu ist vorzusehen, dass das erste Sicherheitsventil und das zweite Sicherheitsventil jeweils zumindest eine 3/2-Wege-Funktionalität aufweisen, insbesondere zumindest als 3/2-Wegeventile ausgebildet sind. Die beiden Sicherheitsventile sind hierfür in der Ruhestellung derart fluidisch verschaltet, dass eine kommunizierende Verbindung zwischen einer dem Fluidanschluss zugeordneten Druckluftversorgung und dem Arbeitsluftkanal vorliegt, während eine Verbindung zwischen dem Arbeitsluftkanal und einem dem Fluidanschluss zugeordneten Entlüftungsausgang unterbrochen ist. Ferner ist vorgesehen, dass die beiden Sicherheitsventile in dem Sicherheitszustand derart fluidisch verschaltet sind, dass eine Blockierung der Druckluftversorgung am Fluidanschluss sowie die Entlüftung des Druckluftverbrauchers über den Fluidanschluss gewährleistet ist. Typischerweise ist ein Arbeitsdruck im Arbeitsluftkanal in einem Bereich zwischen 0 bar und 10 bar angesiedelt.

Die Aufgabe des Drosselventils besteht darin, eine Druckänderung für den Arbeitsdruck im Arbeitsluftkanal nach Bereitstellung von Druckluft an dem Fluidanschluss zu begrenzen. Hierzu ist das Drosselventil zwischen dem Fluidanschluss und der Sicherheitsventilgruppe und somit bezüglich einer Druckluftversorgung der Sicherheitsventilgruppe und der Ventilscheibengruppe stromauf der Sicherheitsventilgruppe angeordnet. Beispielhaft weist das Drosselventil ein Einstellmittel auf, mit dem ein Druckniveau, bei dessen Erreichen eine Umschaltung von einer gedrosselten Betriebsweise in eine ungedrosselte Betriebsweise erfolgt, von einem Benutzer eingestellt werden kann. Besonders bevorzugt ist vorgesehen, dass das Einstellmittel für eine Einstellung einer Federvorspannung für die Druckwaage eingerichtet ist.

Vorteilhaft ist es, wenn eine Ventilscheibe der Ventilscheibengruppe als Direktsteuerventilscheibe mit einem elektrisch ansteuerbaren Hauptventil ausgebildet ist, wobei das Hauptventil fluidisch mit dem Arbeitsluftkanal verbunden ist und elektrisch über den elektrischen Versorgungsstrang mit der Ventilsteuerung verbunden ist. Mit einem derartigen elektrisch ansteuerbaren Hauptventil, das als Sitzventil oder als Schieberventil ausgebildet sind kann und das mit einem Magnetspulenantrieb oder einem piezoelektrischen Antrieb oder einem anderen elektrischen Aktor zur Bewegung eines im Fluidkanal angeordneten Ventilglieds ausgerüstet ist, besteht ein unmittelbarer Zusammenhang zwischen einem von der Ventilsteuerung bereitgestellten elektrischen Steuersignal und einer Reaktion des Hauptventils in der Direktsteuerventilscheibe. Ein solches Hauptventil wird auch als direktgesteuertes Ventil bezeichnet. In Abhängigkeit von der Ausgestaltung des Antriebssystems, das in dem Hauptventil für die Bewegung des Ventilglieds vorgesehen ist, kann das Hauptventil als Schaltventil oder als Proportionalventil ausgebildet sein.

Bevorzugt ist vorgesehen, dass der Fluidversorgungsstrang einen Steuerluftkanal umfasst und dass das erste Sicherheitsventil und das zweite Sicherheitsventil für eine redundante Beeinflussung eines Fluidstroms im Steuerluftkanal, insbesondere für eine Blockierung einer fluidisch kommunizierenden Verbindung zwischen dem Fluidanschluss und dem Steuerluftkanal sowie für eine Entlüftung des Steuerluftkanals, ausgebildet sind. Ein Steuerluftkanal ist erforderlich, wenn wenigstens eine der Ventilscheiben als Vorsteuerventilscheibe ausgebildet ist, die ein elektrisch ansteuerbares Vorsteuerventil aufweist, das über den elektrischen Versorgungsstrang elektrisch mit der Ventilsteuerung verbunden ist und das fluidisch mit dem Steuerluftkanal des Fluidversorgungsstrangs verbunden ist, wobei die Vorsteuerventilscheibe ein fluidisch vorgesteuertes Hauptventil aufweist, das fluidisch mit dem Vorsteuerventil und mit dem Arbeitsluftkanal verbunden ist. Eine solche Vorsteuerventilscheibe ist insbesondere dann von Interesse, wenn mit dieser Ventilscheibe ein hoher Arbeitsdruck und/oder ein hohes Arbeitsluftvolumen geschaltet werden soll und hierfür ein direktgesteuertes Hauptventil eine Dimensionierung erfordern würde, die nicht mit den Größenanforderungen und/oder den Kostenanforderungen für eine Ventilscheibe der Ventilscheibengruppe vereinbar wäre. Vorzugsweise aber nicht notwendigerweise wird im Steuerluftkanal ein geringerer Luftdruck bereitgestellt, als dies im Arbeitsluftkanal der Fall ist. Die Aufgabe des Vorsteuerventils besteht darin, in Abhängigkeit von einem elektrischen Steuersignal der Ventilsteuerung den im Steuerluftkanal vorliegenden Steuerdruck an das fluidisch vorgesteuerte Hauptventil bereitzustellen, um dieses aus einer ersten Funktionsstellung, insbesondere einer Schließstellung, in eine zweite Funktionsstellung, insbesondere eine Öffnungsstellung, zu überführen. Das fluidisch vorgesteuerte Hauptventil ist dazu ausgebildet, in einer seiner Funktionsstellungen eine fluidisch kommunizierende Verbindung zwischen dem Arbeitsluftkanal und dem Arbeitsanschluss der jeweiligen Ventilscheibe zu blockieren. Ferner ist das fluidisch vorgesteuerte Hauptventil dazu ausgebildet, im Zuge der Umschaltung zwischen der Schließstellung und der Öffnungsstellung, spätestens bei Erreichen der Öffnungsstellung, die fluidisch kommunizierende Verbindung zwischen dem Arbeitsluftkanal und dem Arbeitsanschluss zumindest teilweise, vorzugsweise vollständig, freizugeben.

Typischerweise ist vorgesehen, dass das fluidisch vorgesteuerte Hauptventil bei einer Entlüftung des Steuerluftkanals, beispielsweise durch eine Rückstellfeder, in die Schließstellung überführt wird, sodass allein durch die Entlüftung des Steuerluftkanals mit Hilfe der Sicherheitsventilgruppe zumindest die Blockierung einer weiteren Arbeitsluftversorgung für den Druckluftverbraucher erzielt werden kann.

In weiterer Ausgestaltung der Erfindung ist vorgesehen, dass zwischen der Sicherheitsventilgruppe und der Ventilscheibengruppe eine Sperrscheibe angeordnet ist, die für eine Blockierung des Arbeitsluftkanals zwischen der Sicherheitsventilgruppe und der Ventilscheibengruppe ausgebildet ist und die einen Arbeitsluftanschluss aufweist, der für eine Einspeisung von Arbeitsluft in den Arbeitsluftkanal der Ventilscheibengruppe ausgebildet ist. Mit einer derartigen Sperrscheibe wird eine Zwischeneinspeisung von Arbeitsluft in die Ventilanordnung ermöglicht. Diese Zwischeneinspeisung ermöglicht es, einen oder mehrere Druckluftverbraucher, die an die stromab bzw. nachgelagert zur Sperrscheibe angeordnete Ventilscheibengruppe angeschlossen sind, mit einem Arbeitsdruck zu versorgen, der von einem Arbeitsdruck einer Ventilscheibengruppe abweicht, die vorgelagert bzw. stromauf zur Sperrscheibe angeordnet ist. Bei Verwendung einer derartigen Sperrscheibe beeinflusst die Sicherheitsventilgruppe den Steuerluftkanal, während kein Einfluss der Sicherheitsventilgruppe auf den stromab der Sperrscheibe verlaufenden Arbeitsluftkanal vorgesehen ist.

Bevorzugt ist vorgesehen, dass zwischen der Sicherheitsventilgruppe und der Ventilscheibengruppe eine Sperrscheibe angeordnet ist, die für eine Blockierung des Steuerluftkanals zwischen der Sicherheitsventilgruppe und der Ventilscheibengruppe ausgebildet ist und die einen Steuerluftanschluss aufweist, der für eine Einspeisung von Steuerluft in den Steuerluftkanal der Ventilscheibengruppe ausgebildet ist. Mit einer derartigen Sperrscheibe wird eine Zwischeneinspeisung von Steuerluft in die Ventilanordnung ermöglicht. Diese Zwischeneinspeisung ermöglicht es, wenigstens eine Vorsteuerventilscheibe, die in der nachgelagert zur Sperrscheibe angeordneten Ventilscheibengruppe enthalten ist, mit einem Steuerdruck zu versorgen, der unabhängig von einem Steuerdruck für eine Ventilscheibengruppe ist, die vorgelagert zur Sperrscheibe angeordnet ist. Bei Verwendung einer derartigen Sperrscheibe beeinflusst die Sicherheitsventilgruppe den Arbeitsluftkanal, während keinen Einfluss der Sicherheitsventilgruppe auf den stromab der Sperrscheibe verlaufenden Steuerluftkanal vorgesehen ist.

In weiterer Ausgestaltung der Erfindung ist vorgesehen, dass das erste Sicherheitsventil und/oder das zweite Sicherheitsventil ein elektrisch mit der Sicherheitsteuerung und fluidisch mit dem Fluidanschluss verbundenes Sicherheitshauptventil aufweist und dass die Sicherheitssteuerung für eine elektrische Ansteuerung des Sicherheitshauptventils ausgebildet ist. Mit einem derartigen elektrisch ansteuerbaren Sicherheitshauptventil, das als Sitzventil oder als Schieberventil ausgebildet sind kann und das mit einem Magnetspulenantrieb oder einem piezoelektrischen Antrieb oder einem anderen elektrischen Aktor zur Bewegung eines im Fluidkanal angeordneten Ventilglieds ausgerüstet ist, besteht ein unmittelbarer Zusammenhang zwischen einem von der Sicherheitssteuerung bereitgestellten elektrischen Steuersignal und einer Reaktion des Sicherheitshauptventils der Sicherheitsventilgruppe. Ein solches Sicherheitshauptventil wird auch als direktgesteuertes Sicherheitsventil bezeichnet. In Abhängigkeit von der Ausgestaltung des Antriebssystems, das in dem Sicherheitshauptventil für die Bewegung des Ventilglieds vorgesehen ist, kann das Sicherheitshauptventil als Schaltventil oder als Proportionalventil ausgebildet sein. Bevorzugt ist vorgesehen, dass das Sicherheitshauptventil bei Abwesenheit eines elektrischen Steuersignals der Sicherheitssteuerung durch eine dem Sicherheitshauptventil zugehörige Vorspanneinrichtung, beispielsweise eine Wendelfeder, in der Schließstellung verbleibt bzw. bei Abschaltung des elektrischen Steuersignals in die Schließstellung überführt wird.

In der Schließstellung, die auch als Sicherheitsstellung bezeichnet werden kann, ist das Sicherheitshauptventil vorzugsweise dazu ausgebildet, eine fluidisch kommunizierende Verbindung zwischen der Arbeitsdruckversorgung am Fluidanschluss und dem Arbeitsluftkanal und/oder zwischen der Steuerluftversorgung am Fluidanschluss und dem Steuerluftkanal zu blockieren und ergänzend oder alternativ eine Entlüftung des Arbeitsluftkanals und/oder des Steuerluftkanals vorzunehmen.

Besonders bevorzugt kann vorgesehen sein, dass das erste Sicherheitsventil und das zweite Sicherheitsventil in technischer Hinsicht, beispielsweise im Hinblick auf das jeweilige Antriebssystem und/oder das Ventilglied und/oder die Fluidführung im Sicherheitsventilgehäuse unterschiedlich gestaltet sind, um damit eine diversitäre Redundanz zu erzielen. Die Verwendung derart ausgebildeter Sicherheitsventile ist insbesondere dann vorgesehen, wenn mit den Sicherheitsventilen ausschließlich eine Einflussnahme auf den Steuerluftkanal und/oder den Arbeitsluftkanal einer stromab nachgelagerten Ventilscheibengruppe genommen werden soll.

Bei einer alternativen Ausgestaltung der Sicherheitsventilgruppe ist vorgesehen, dass das erste Sicherheitsventil und/oder das zweite Sicherheitsventil ein elektrisch mit der Sicherheitsteuerung und fluidisch mit dem Fluidanschluss verbundenes Sicherheitsvorsteuerventil und ein fluidisch mit dem Sicherheitsvorsteuerventil und fluidisch mit dem Fluidanschluss verbundenes Sicherheitshauptventil aufweist, wobei die Sicherheitssteuerung für eine elektrische Ansteuerung des Sicherheitsvorsteuerventils ausgebildet ist und wobei das Sicherheitsvorsteuerventil für eine fluidische Ansteuerung des Sicherheitshauptventils ausgebildet ist.

Eine derartige Ausgestaltung der beiden Sicherheitsventile ist insbesondere dann von Interesse, wenn mit den Sicherheitsventilen der Arbeitsdruck für die stromab nachgelagerte Ventilscheibengruppe geschaltet werden soll und hierfür ein direktgesteuertes Sicherheitshauptventil eine Dimensionierung erfordern würde, die nicht mit den Größenanforderungen und/oder den Kostenanforderungen für die Sicherheitsventilgruppe vereinbar wären. Die Aufgabe des Sicherheitsvorsteuerventils besteht darin, in Abhängigkeit von einem elektrischen Steuersignal der Sicherheitssteuerung den im Steuerluftkanal vorliegenden Steuerdruck an das fluidisch vorgesteuerte Hauptventil bereitzustellen, um dieses aus einer ersten Funktionsstellung, insbesondere einer Schließstellung, in eine zweite Funktionsstellung, insbesondere eine Öffnungsstellung, zu überführen. Das fluidisch vorgesteuerte Sicherheitshauptventil ist vorzugsweise dazu ausgebildet, in der Schließstellung, die auch als Sicherheitsstellung bezeichnet werden kann, eine fluidisch kommunizierende Verbindung zwischen der Arbeitsdruckversorgung am Fluidanschluss und dem Arbeitsluftkanal und/oder zwischen der Steuerluftversorgung am Fluidanschluss und dem Steuerluftkanal zu blockieren und ergänzend oder alternativ eine Entlüftung des Arbeitsluftkanals und/oder des Steuerluftkanals vorzunehmen.

Besonders bevorzugt kann vorgesehen sein, dass das erste Sicherheitsventil und das zweite Sicherheitsventil in technischer Hinsicht, beispielsweise im Hinblick auf das jeweilige Antriebssystem und/oder das Ventilglied und/oder die Fluidführung im Sicherheitsventilgehäuse unterschiedlich gestaltet sind, um damit eine diversitäre Redundanz zu erzielen.

Bei einer Weiterbildung der Erfindung ist vorgesehen, dass das Drosselventil einen Eingangsanschluss zur Verbindung mit dem Fluidanschluss und einen Steuerluftausgang zur Verbindung mit einem Steuerlufteingang der Sicherheitsventilgruppe aufweist. Hierbei ist vorzugsweise vorgesehen, dass ausschließlich zwischen dem Eingangsanschluss und dem Steuerluftausgang, der zur Steuerluftversorgung der Sicherheitsventilgruppe vorgesehen ist, eine unmittelbare fluidische Verbindung vorliegt, sodass die am Eingangsanschluss bereitgestellte Druckluft nur an den Steuerluftausgang ungedrosselt zur Verfügung gestellt wird. Gegebenenfalls ist vorgesehen, dass die Steuerluft auch ungedrosselt an die Ventilscheibengruppe bereitgestellt wird. Alternativ kann vorgesehen sein, dass die Steuerluftversorgung der Sicherheitsventile über einen separaten Anschluss am Drosselventil ausgeführt wird, so dass der Arbeitsdruck kleiner sein kann als der minimal benötigte Steuerdruck oder größer als der max. zulässige Steuerdruck des Sicherheitsventils.

Bei einer vorteilhaften Weiterbildung der Erfindung ist vorgesehen, dass das erste Sicherheitsventil und/oder das zweite Sicherheitsventil mit einem Stellungssensor ausgerüstet ist, der zur Erfassung einer Ventilstellung ausgebildet ist und der elektrisch mit der Sicherheitssteuerung verbunden ist. Mit dem Stellungssensor kann eine Position des Ventilglieds des jeweiligen Sicherheitsventils erfasst werden, um für die Sicherheitssteuerung eine Möglichkeit zur Verfügung zu stellen, ein Schaltverhalten des jeweiligen Sicherheitsventils bei einer sicherheitsgerichteten Ansteuerung zu überwachen. Beispielhaft ist der Stellungssensor dazu ausgebildet, eine Anordnung des Ventilglieds in der Schließstellung zu erfassen und für diesen Fall ein vorgegebenes erstes Sensorsignal bereitzustellen, Sofern sich das Ventilglied nicht in der Schließstellung befinden sollte, stellt der Stellungssensor ein vorgegebenes zweites Sensorsignal bereit, das sich vom ersten Sensorsignal unterscheidet. Anhand dieser Sensorsignale wird die Sicherheitssteuerung in die Lage versetzt, die Positionierung des Ventilglieds in der Sperrstellung zu überprüfen. Alternativ kann vorgesehen sein, dass der Stellungssensor für eine Überwachung der Position des Ventilglieds zumindest längs eines Teils eines Bewegungswegs für das Ventilglied ausgebildet ist. Hierbei kann die Sicherheitssteuerung insbesondere anhand eines Bewegungsverhaltens des Ventilglieds eine Analyse eines Funktionszustands für das jeweilige Sicherheitsventil vornehmen. Bevorzugt ist die Sicherheitssteuerung derart ausgebildet, dass sie für den Fall einer Abweichung zwischen einem erwarteten Sensorsignal des Stellungssensors und einer tatsächlichen Sensorsignal des Stellungssensors zum einen Maßnahmen ergreift, mit denen der Druckluftverbraucher oder die Druckluftverbraucher, die mit der Ventilanordnung verbunden sind, stillgesetzt oder energielos gemacht werden. Ferner kann die Sicherheitssteuerung weitere Maßnahmen ergreifen, die beispielsweise eine Wiederinbetriebnahme der mit der Ventilanordnung ausgerüsteten Maschine oder Anlage erst nach Freigabe durch autorisiertes Bedienpersonal ermöglicht.

Vorteilhafte Ausführungsformen der Erfindung sind in der Zeichnung dargestellt. Hierbei zeigt:

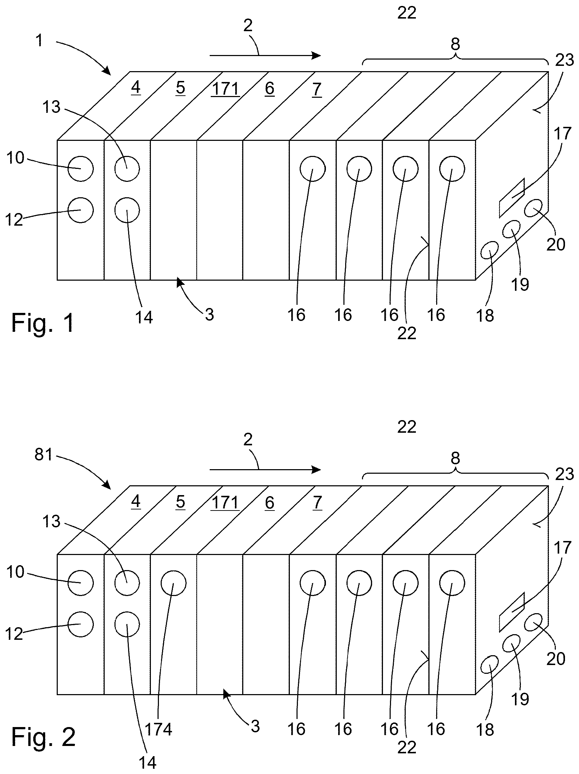

- Figur 1: eine streng schematische Darstellung einer ersten Ausführungsform einer Ventilanordnung, die eine Aneinanderreihung einer Einspeiseplatte, einer Ventilsteuerung, einem Drosselventil, einer Sicherheitssteuerung, einer Sicherheitsventilgruppe und einer Ventilscheibengruppe umfasst,
- Figur 2: eine streng schematische Darstellung einer zweiten Ausführungsform einer Ventilanordnung, bei der eine Zwischeneinspeisung zwischen der Sicherheitsventilgruppe und der Ventilscheibengruppe vorgesehen ist,

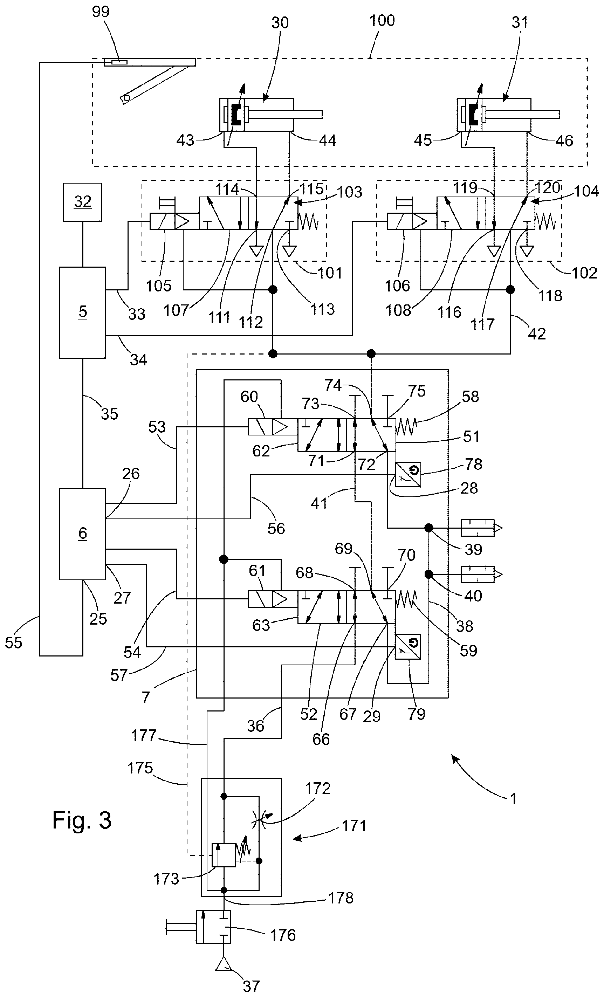

- Figur 3: ein streng schematisches Fluidschaltbild einer ersten Ausführungsform für eine Verschaltung einer Ventilsteuerung, einer Sicherheitssteuerung, einem Drosselventil, einer Sicherheitsventilgruppe und einer Ventilscheibengruppe sowie zugeordneten Druckluftverbrauchern, wobei für die Ventilscheibengruppe eine Abschaltung von Arbeitsluft und Steuerluft durch die Sicherheitsventilgruppe vorgesehen sind, und

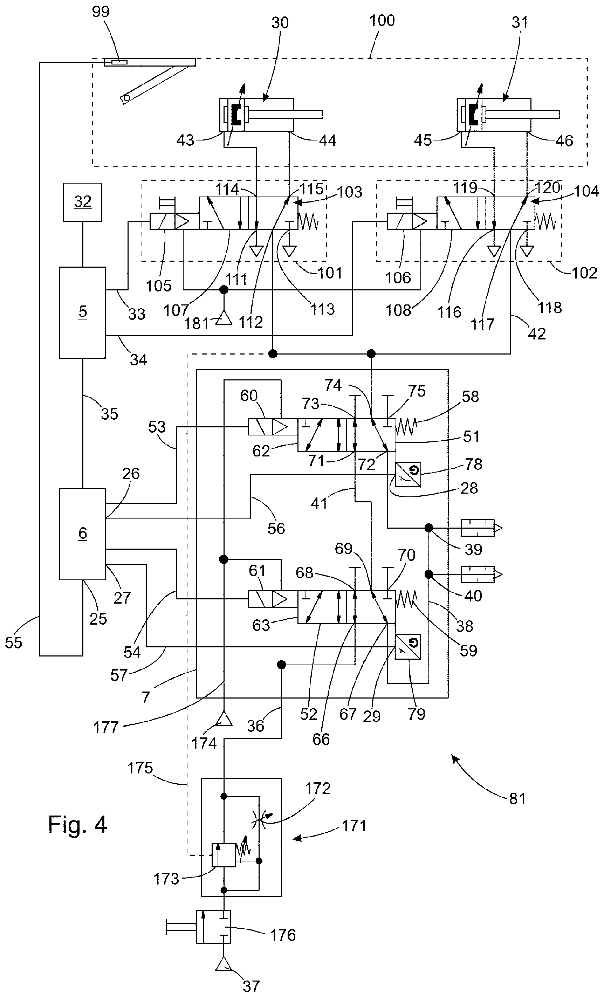

- Figur 4: ein streng schematisches Fluidschaltbild einer zweiten Ausführungsform für eine Verschaltung einer Ventilsteuerung, einer Sicherheitssteuerung, einer Sicherheitsventilgruppe eines Drosselventils und einer Ventilscheibengruppe sowie zugeordneten Druckluftverbrauchern, wobei eine Abschaltung von Arbeitsluft durch die Sicherheitsventilgruppe und eine Zwischeneinspeisung von Steuerluft vorgesehen sind.

Eine in der Figur 1 gezeigte Ventilanordnung 1 ist zur Bereitstellung von Druckluft an nicht dargestellte Druckluftverbraucher wie beispielsweise Pneumatikzylinder, Schwenkantriebe, Bremseinrichtungen, ausgebildet und für einen Einsatz in einem industriellen Umfeld, beispielsweise an einer nicht gezeigten Maschine oder in einer nicht gezeigten Anlage vorgesehen. Die fluidische Verschaltung der Ventilanordnung 1 ist in der Figur 3 gezeigt, die nachstehend näher beschrieben wird.

Die in der Figur 1 dargestellte Ventilanordnung 1 umfasst mehrere, in der zeichnerischen Darstellung als gleichartig geformte Quader vereinfachte und längs einer Aufreihungsrichtung 2 aneinander angereihte Funktionsmodule 3. Bei der Ventilanordnung 1 gemäß der Figur 1 umfassen die Funktionsmodule 3 eine Einspeiseplatte 4, eine Ventilsteuerung 5, ein auch als Sanftanlaufventil bezeichnetes Drosselventil 171, eine Sicherheitssteuerung 6, eine Sicherheitsventilgruppe 7 sowie eine Ventilscheibengruppe 8. Gegebenenfalls ist vorgesehen, dass die Funktionsmodule 3, die in den Figuren 1 bis 3 jeweils als separate Komponenten dargestellt sind, auch zumindest teilweise in gemeinsamen Gehäusen oder als miteinander kombinierbare Module ausgebildet sind.

Die Einspeiseplatte 4 ist rein exemplarisch mit einem Arbeitsluftanschluss 10 und einem Entlüftungsanschluss 12 ausgestattet. Der Arbeitsluftanschluss 10 kann beispielsweise mit einer nicht dargestellten Druckluftquelle verbunden werden, die im Hinblick auf einen bereitzustellen Maximaldruck sowie im Hinblick auf einen bereitzustellenden maximalen Volumenstrom dazu ausgebildet ist, mehrere Druckluftverbraucher, die mit der Ventilanordnung 1 verbunden werden können, zu versorgen. Rein exemplarisch ist vorgesehen, dass die Steuerluft für die Sicherheitsventilgruppe 7 und die Ventilscheibengruppe 8 unmittelbar von der Arbeitsluft abgezweigt wird.

Der Entlüftungsanschluss 12 ermöglicht die Abfuhr von Druckluft aus der Ventilanordnung und kann beispielsweise mit einem nicht dargestellten Schalldämpfer versehen werden.

Ausgehend von der Einspeiseplatte 4 erstrecken sich längs der Aufreihungsrichtung 2 durch sämtliche stromab der Einspeiseplatte 4 angeordneten Funktionsmodule 3 jeweils ein Arbeitsluftkanal 18, ein Steuerluftkanal 19 sowie ein Entlüftungskanal 20, die einen Fluidversorgungsstrang 17 bilden. Hierbei ist vorgesehen, dass der Arbeitsluftkanal 18, der Steuerluftkanal 19 und der Entlüftungskanal 20 mit Ausnahme der Einspeiseplatte 4 jedes der Funktionsmodule 3 jeweils zwischen einander entgegengesetzten Seitenflächen 21, 22 des jeweiligen Funktionmodulen 3 (in der Darstelung der Figur 1 an der letzten Ventilscheibe der Ventilscheibengruppe 8 eingezeichnet) durchsetzen und an diesen Seitenflächen 21, 22 ausmünden. Die Anordnung des Arbeitsluftkanals 18, des Steuerluftkanals 19 und des Entlüftungskanals 20 ist an der rechten Seitenfläche 22 der Ventilscheibengruppe 8 zu sehen. Bei einer praktischen Verwendung der Ventilanordnung 1 werden der Arbeitsluftkanal 18, der Steuerluftkanal 19 sowie der Entlüftungskanal 20 durch eine nicht dargestellte Abschlussplatte, die an die stromab der Ventilscheibengruppe 8 angereiht wird, fluiddicht verschlossen.

Angrenzend an die Einspeiseplatte 4 ist bei der Ventilanordnung 1 gemäß der Figur 1 rein exemplarisch eine Ventilsteuerung 5 angereiht, die auf einer nicht näher dargestellten gedruckten Schaltung einen Mikroprozessor sowie zum Betrieb des Mikroprozessors notwendige elektrische und elektronische Peripheriekomponenten aufweist. Dabei dient der Mikroprozessor zum Empfang und zur Verarbeitung von elektrischen Steuersignalen, die an einem Steuereingang 13 der Ventilsteuerung 5 von einer nicht dargestellten übergeordneten Steuerung, beispielsweise einer speicherprogrammierbaren Steuerung, bereitgestellt werden sowie zur Ausgabe von elektrischen Steuersignalen an die Ventilscheibengruppe 8. Die Ventilsteuerung 5 kann beispielsweise zur Abarbeitung eines in dem Mikroprozessor gespeicherten Computerprogramms ausgebildet sein, mit dem die für eine Funktion der Maschine oder Vorrichtung notwendigen Aktionen der Druckluftverbraucher, die mit der Ventilanordnung 1 verbunden werden können, beeinflusst werden. Beispielhaft ist vorgesehen, dass die Ventilsteuerung 5 zusätzlich zum Steuereingang 13 einen elektrischen Versorgungseingang 14 aufweist, mit dem elektrische Energie zum Betrieb der stromab der Ventilsteuerung 5 angeordneten Funktionsmodule 3 in die Ventilanordnung 1 eingespeist werden kann. Ausgehend von der Ventilsteuerung 5 erstreckt sich ein elektrischer Versorgungsstrang 17 durch die stromab der Ventilsteuerung 5 angeordneten Funktionsmodule 3. Der elektrische Versorgungsstrang 17 umfasst nicht näher dargestellte elektrische Versorgungsleitungen, die mit dem Versorgungseingang 14 verbunden sind, sowie Signalleitungen für eine Signalübertragung zwischen der Ventilsteuerung 5 und der Ventilscheibengruppe 8. Für diese Signalübertragung kann eine Anordnung einer Vielzahl von elektrischen Leitungen (Multipol) und/oder ein internes Bussystem, das über wenige elektrische Leitungen geführt werden kann, vorgesehen sein.

Jedes der Funktionsmodule 3 wird jeweils zwischen den einander entgegengesetzten Seitenflächen 21, 22 von dem elektrischen Versorgungsstrang 17 durchsetzt, der jeweils an den Seitenflächen 21, 22 ausmündet. Die Anordnung des elektrischen Versorgungsstrangs 17 ist an der rechten Seitenfläche 22 der Ventilscheibengruppe 8 zu erkennen, der dort mit einem Kontaktstecker versehen ist. Bei einer praktischen Verwendung dieser Kontaktstecker durch die nicht dargestellte Abschlussplatte geschützt.

Angrenzend an die Ventilsteuerung 5 ist ein Drosselventil 171 angereiht, das fluidisch in den Fluidversorgungsstrang 18 eingeschleift ist, wie dies in der Figur 3 näher dargestellt ist. Aus der Figur 3 ist auch zu entnehmen, dass das Drosselventil 171 rein exemplarisch eine fluidische Parallelschaltung einer Drossel 172 und einer Druckwaage 173 umfasst und für eine zeitlich begrenzte Drosselung der Luftzufuhr an den Fluidversorgungsstrang 18 ausgebildet ist, wie nachstehend im Zusammenhang mit der Beschreibung der Figur 3 näher erläutert wird.

An das Drosselventil 171 ist gemäß der Darstellung der Figur 1 rein exemplarisch eine Sicherheitssteuerung 6 angereiht, die auf einer nicht näher dargestellten gedruckten Schaltung einen Mikroprozessor sowie zum Betrieb des Mikroprozessors notwendige elektrische und elektronische Peripheriekomponenten aufweist. Dabei dient der Mikroprozessor zum Empfang und zur Verarbeitung von elektrischen Sensorsignalen, die an Sensoreingängen 25, 26, 27 beispielsweise von einem Sicherheitssensor 99 oder von Stellungssensoren 78, 79 bereitgestellt werden können, wie sie in den Figuren 4 bis 6 näher dargestellt sind. Beispielhaft ist vorgesehen, dass die Stellungssensoren 78 als Bestandteil der Sicherheitsventilgruppe 7 über Sensorleitungen 55, 56 ausgehend von Sensorausgängen 28, 29 der Stellungssensoren 78, 79 mit den Sensoreingängen 26, 27 der Sicherheitssteuerung 6 verbunden sind.

Die Sicherheitssteuerung 6 ist derart beschaffen, dass an den Sensoreingängen 25, 26, 27 bereitgestellte Sensorsignale sicherheitsgerichtet verarbeitet werden können. Hierzu kann beispielsweise eine Verarbeitung der Sensorsignale in unterschiedlichen Computerprogrammmodulen, die vorzugsweise in unterschiedlicher Weise programmiert sind, vorgenommen werden. Alternativ kann vorgesehen sein, dass die Sensorsignale in mehreren, insbesondere unterschiedlich aufgebauten und programmierten, Mikroprozessoren verarbeitet werden. Die aus der Verarbeitung der Sensorsignale resultierenden Verarbeitungsergebnisse werden miteinander verglichen. Beispielhaft kann vorgesehen sein, dass eine Auslösung einer Sicherheitsfunktionen durch die Sicherheitssteuerung 6 vorgenommen wird, sofern die Verarbeitungsergebnisse nicht innerhalb eines vorgegebenen Toleranzintervalls liegen. Ferner kann eine Auslösung eine Sicherheitsfunktionen durch die Sicherheitssteuerung vorgenommen werden, sofern die Verarbeitungsergebnisse innerhalb des vorgegebenen Toleranzintervalls liegen, jedoch ein vorgegebener Schwellwert beispielsweise überschritten oder unterschritten ist. Eine Kommunikation zwischen der Sicherheitsteuerung 6 und Sicherheitsventilen 51, 52 der stromab angereihten Sicherheitsventilgruppe 7 findet vorzugsweise über separate elektrische Leitungen im elektrischen Versorgungsstrang 17 statt. Alternativ kann eine Kommunikation zwischen der Sicherheitsteuerung 6 und der Sicherheitsventilgruppe 7 auch über sicherheitsgerichtete Datenpakete einer internen Buskommunikation der Ventilanordnung 1 durchgeführt werden.

Die in der Sicherheitsventilgruppe 7 enthaltenen Sicherheitsventile 51, 52 werden nachstehend im Zusammenhang mit den Figuren 3 und 4 näher erläutert. In gleicher Weise gilt dies für die Ventilscheibengruppe 8.

Die zweite Ausführungsform einer Ventilanordnung 81, wie sie in der Figur 2 dargestellt ist, unterscheidet sich von der ersten Ausführungsform der Ventilanordnung 1 gemäß der Figur 1 lediglich dadurch, dass dem Drosselventil 171 ein Steuerluftanschluss 174 zugeordnet ist, über den rein exemplarisch alle fluidisch vorgesteuerten Ventile der Ventilanordnung 81 mit Steuerluft versorgt werden können. Die Steuerluftversorgung ist dadurch separat und vollständig unabhängig von der Schaltstellung des Drosselventils 171. Ergänzend kann zwischen der Sicherheitsventilgruppe 7 und der Ventilscheibengruppe 8 eine nicht dargestellte Sperrscheibe angeordnet werden. Die Sperrscheibe ist dazu ausgebildet, den Steuerluftkanal 19 innerhalb des Fluidversorgungsstrangs 18 zwischen der Sicherheitsventilgruppe 7 und der Ventilscheibengruppe 8 zu blockieren. Um eine Bereitstellung von Steuerluft an die stromab der Sperrscheibe angeordnete Ventilscheibengruppe 8 zu ermöglichen, weist die Sperrscheibe einen weiteren, nicht dargestellten Steuerluftanschluss auf, der fluidisch kommunizierend mit dem Fluidversorgungsstrang 18 innerhalb der Ventilscheibengruppe 8 verbunden ist. Ein Einsatz einer solchen Sperrscheibe ist insbesondere dann von Interesse, wenn Vorsteuerventile der Ventilscheibengruppe 8 mit einem abweichenden, insbesondere mit einem niedrigeren, Steuerdruck als Vorsteuerventile der Sicherheitsventilgruppe 7 betrieben werden sollen.

Das in der Figur 3 gezeigte schematische Fluidschaltbild der ersten Ausführungsform der Ventilanordnung 1 zeigt die fluidische und elektrische Verschaltung der Ventilsteuerung 5, der Sicherheitssteuerung 6, dem Drosselventil 171, der Sicherheitsventilgruppe 7 und der Ventilscheibengruppe 8. Ferner sind zwei rein exemplarisch als Pneumatikzylinder ausgebildete Druckluftverbraucher 30, 31 jeweils mit einer Ventilscheibe 9 der Ventilscheibengruppe 8 verbunden.

Wie der Darstellung der Figur 3 entnommen werden kann, ist die Ventilsteuerung 5 rein exemplarisch elektrisch mit einer übergeordneten Steuerung 32 verbunden, die beispielsweise eine Maschinensteuerung einer nicht dargestellten Produktionsmaschine sein kann, in der die Ventilanordnung 1 integriert ist. Die übergeordnete Steuerung 32 stellt elektrische Signale sowie elektrische Energie an die Ventilsteuerung 5 bereits. Beispielhaft ist vorgesehen, dass die elektrischen Signale der übergeordneten Steuerung 32 an dem in der Figur 1 gezeigten Steuereingang 13 bereitgestellt werden, während die elektrische Energie an dem in der Figur 1 gezeigten Versorgungseingang 14 der Ventilsteuerung 5 bereitgestellt wird.

Die Ventilsteuerung 5 ist zur Verarbeitung der elektrischen Signale der übergeordneten Steuerung 32 sowie zur Bereitstellung von elektrischen Steuersignalen an die rein exemplarisch als Vorsteuerventilscheiben ausgebildeten Ventilscheiben 101, 102 der Ventilscheibengruppe 8 ausgebildet. Hierzu sind die Ventilscheiben 101, 102 über Steuerleitungen 33, 34 elektrisch mit der Ventilsteuerung 5 verbunden.

Ferner ist vorgesehen, dass die am Versorgungseingang 14 der Ventilsteuerung 5 gemäß der Figur 1 bereitgestellte elektrische Energie über eine in der Figur 3 gezeigte Versorgungsleitung 35 auch an die Sicherheitssteuerung 6 bereitgestellt wird. Die Versorgungsleitung 35 beinhaltet eine nicht dargestellte Kommunikationsleitung, über die ein Datenaustausch zwischen der Sicherheitssteuerung 6 und der Ventilsteuerung 5 durchgeführt werden kann. Insbesondere kann die Sicherheitssteuerung 6 über die Versorgungsleitung 35 mit Informationen darüber versorgt werden, welchen Schaltzustand die Ventilscheiben 101, 102 auf Basis von Steuersignalen der Ventilsteuerung 5 einnehmen sollen, um daraufhin eine entsprechende Freigabe von Steuersignalen an die Sicherheitsventile 51, 52 zu ermöglichen.

Die Sicherheitssteuerung 6 ist über eine erste Sicherheitssteuerleitung 53 elektrisch mit dem ersten Sicherheitsventil 51 verbunden. Ferner ist die Sicherheitssteuerung 6 über eine zweite Sicherheitssteuerleitung 54 mit dem zweiten Sicherheitsventil 52 verbunden. Ferner erstreckt sich zwischen dem Sicherheitssensor 99, der rein exemplarisch als Türkontaktsensor eines nur schematisch gezeigten, um die beiden Druckluftverbraucher 30, 31 angeordneten Sicherheitszauns 100 ausgebildet ist, und der Sicherheitsteuerung 6 eine erste Sensorleitung 55. Eine zweite Sensorleitung 56 erstreckt sich zwischen einem Stellungssensor 78, der dem ersten Sicherheitsventil 51 zugeordnet ist. Eine dritte Sensorleitung 57 erstreckt sich zwischen einem Stellungssensor 79, der dem zweiten Sicherheitsventil 52 zugeordnet ist.

Beispielhaft sind die beiden Sicherheitsventile 51, 52 jeweils als elektropneumatisch vorgesteuerte 5/2-Wegeventile ausgebildet, die jeweils von einer Federeinrichtung 58, 59 in einer ersten Funktionsstellung gehalten werden, wie sie in der Figur 3 gezeigt ist. Bei einer Bereitstellung eines elektrischen Steuersignals von der Sicherheitsteuerung 6 über die Sicherheitssteuerleitung 53 bzw. 54 kann das jeweilige Sicherheitsventil 51, 52 aus der ersten Funktionsstellung gemäß der Figur 3 in eine nicht gezeigte zweite Funktionsstellung überführt werden. Hierbei bewirkt das elektrische Steuersignal eine Ansteuerung eines nur schematisch dargestellten, beispielhaft als Magnetventil ausgebildeten, Vorsteuerventils 60 bzw. 61. Hierdurch wird Steuerluft an ein zugeordnetes Hauptventil 62, 63 bereitgestellt, wodurch das jeweilige Hauptventil 62, 63 aus der ersten Funktionsstellung in die zweite Funktionsstellung überführt werden kann.

Bei einer Abschaltung des elektrischen Steuersignals durch die Sicherheitssteuerung 6 wird die Zufuhr von Steuerluft durch die Vorsteuerventile 60, 61 an die zugeordneten Hauptventile 62, 63 unterbrochen. Vorzugsweise sind die Vorsteuerventile 60, 61 derart ausgebildet, dass sie zusätzlich zu der Unterbrechung der Zufuhr von Steuerluft auch eine Druckreduktion im jeweiligen nicht näher dargestellten Steuerluftabschnitt des zugeordneten Hauptventils 62, 63 bewirken, sodass das zugeordnete Hauptventil 62, 63 durch Einwirkung der Federeinrichtung 58 bzw. 59 aus der nicht dargestellten zweiten Funktionsstellung in die erste Funktionsstellung gemäß der Figur 3 überführt wird. Bei Erreichen der ersten Funktionsstellung stellt der jeweilige Stellungssensor 78, 79 über die Sensorleitung 55 bzw. 56 ein Sensorsignal an die Sicherheitssteuerung 6 zur Verfügung, sodass diese eine Information darüber erhält, ob und wann das jeweilige Hauptventil 62 bzw. 63 wieder in die erste Funktionsstellung zurückgekehrt ist.

Da es sich bei der ersten Funktionsstellung um die sichere Funktionsstellung für die Sicherheitsventilgruppe 7 handelt, ist die Sicherheitssteuerung 6 dazu ausgebildet, eine Fehlermeldung auszugeben, sofern nach einer Abschaltung der elektrischen Steuersignale für die beiden Vorsteuerventile 60, 61 nicht innerhalb einer vorgegebenen Zeitspanne die beiden Stellungssensoren 78, 79 die Rückkehr der jeweiligen Hauptventil 62, 63 in die erste Funktionsposition anzeigen. Diese Fehlermeldung kann beispielsweise dazu führen, dass ein erneutes Ansteuern der beiden Sicherheitsventile 51, 52 unterbunden wird. Ergänzend kann diese Fehlermeldung optisch oder akustisch durch die Sicherheitssteuerung 6 angezeigt werden oder über eine Kommunikation mit der Ventilsteuerung 5 an die übergeordnete Steuerung 32 weitergeleitet werden, um dort geeignete Maßnahmen durchzuführen, mit denen eine Behebung des Fehlers eingeleitet werden kann.

Wie der Darstellung der Figur 3 entnommen werden kann, sind die beiden Sicherheitsventile 51 und 52 über eine Versorgungsleitung 36 mit dem Drosselventil 171 verbunden, das seinerseits mit unter Zwischenschaltung eines Einschaltventils 176 einer Druckluftquelle 37 verbunden ist. Beispielhaft ist vorgesehen, dass durch die Druckluftquelle 37 die vollständige Druckversorgung für die Ventilanordnung 1 und die daran angeschlossenen Druckluftverbraucher 30, 31 verwirklicht ist und keine separate Steuerluftversorgung vorgesehen ist.

Innerhalb der Sicherheitsventilgruppe 7 verläuft die Versorgungsleitung 36 zu einem ersten Eingangsanschluss 66 des ersten Sicherheitsventils 51. Ein zweiter Eingangsanschluss 67 des ersten Sicherheitsventils 51 steht über eine Entlüftungsleitung 38, die mit einem ersten Luftauslass 39 und einem zweiten Luftauslass 40 versehen ist, mit einem zweiten Eingangsanschluss 72 des zweiten Sicherheitsventils 52 in Verbindung. Ferner sind einem ersten Ausgangsanschluss 68 und einem dritten Ausgangsanschluss 70 des ersten Sicherheitsventils 51 jeweils ein nicht bezeichneter Sperrkanal zugeordnet. Ein zweiter Ausgangsanschluss 69 des ersten Sicherheitsventils 51 steht über eine Verbindungsleitung 41 mit einem ersten Eingangsanschluss 71 des zweiten Sicherheitsventil 52 in Verbindung. Einem ersten Ausgangsanschluss 73 und einem dritten Ausgangsanschluss 75 sind jeweils nicht bezeichnete Sperrkanäle zugeordnet. Ein zweiter Ausgangsanschluss 74 des zweiten Sicherheitsventils 52 ist mit einer Versorgungsleitung 42 verbunden, die sich zu einem ersten Schaltventil 103 der ersten Ventilscheibe 101 und zu einem zweiten Schaltventil 104 der zweiten Ventilscheibe 102 erstreckt.

Die Versorgungsleitung 42 verzweigt sich sowohl in der ersten Ventilscheibe 101 als auch in der zweiten Ventilscheibe 102 jeweils als Steuerluftversorgung zu einem Vorsteuerventil 105, 106 sowie als Arbeitsluftversorgung zu einem Hauptventil 107, 108. Hierbei ist die Versorgungsleitung 42 jeweils mit einem zweiten Eingangsanschluss 112, 117 des ersten Schaltventils 103 bzw. des zweiten Schaltventils 104 verbunden.

Bei beiden Schaltventilen 103, 104 sind der erste Eingangsanschluss 111, 116 sowie der dritte Eingangsanschluss 113, 118 jeweils mit nicht bezeichneten Entlüftungsausgängen verbunden. Der erste Ausgangsanschluss 114 des ersten Schaltventils 103 ist mit einem ersten Arbeitsanschluss 43 des ersten Druckluftverbrauchers 30 verbunden. Der zweite Ausgangsanschluss 115 des ersten Schallventils 103 ist mit einem zweiten Arbeitsanschluss 44 des ersten Druckluftverbrauchers 30 verbunden. Der erste Ausgangsanschluss 119 des zweiten Schaltventils 104 ist mit einem ersten Arbeitsanschluss 45 des zweiten Druckluftverbrauchers 31 verbunden. Der zweite Ausgangsanschluss 120 des zweiten Schaltventils 104 ist mit einem zweiten Arbeitsanschluss 46 des zweiten Druckluftverbrauchers 31 verbunden.

Die im Drosselventil 171 verwirklichte fluidische Parallelschaltung der Drossel 172 und der Druckwaage 173 ist dazu ausgebildet, einen sanften Druckaufbau für die Ventilanordnung 1 zu gewährleisten. Für die nachstehende Beschreibung wird davon ausgegangen, dass sich das Einschaltventil 176 zunächst in der Sperrstellung gemäß der Figur 3 befindet, bei der kein Zustrom von Druckluft von der Druckluftquelle 37 in die Ventilanordnung 1 stattfindet. Bei einer Umschaltung des Einschaltventils 176 aus der Sperrstellung in eine nicht dargestellte Freigabestellung kann Druckluft von der Druckluftquelle 37 an das Drosselventil 171 und von dort in die Ventilanordnung 1 zugeführt werden.

Rein exemplarisch ist vorgesehen, dass die Vorsteuerventile 60, 61 der Sicherheitsventile 51, 52 über eine Steuerluftleitung 177 direkt einem Fluidanschluss 178 des Drosselventils 171 verbunden sind. Hierdurch können die Vorsteuerventile 60, 61 unabhängig von der Druckbegrenzungsfunktion des Drosselventils 171 direkt mit dem vollen Druck der Druckluftquelle 37 beaufschlagt werden. Somit wird erreicht, dass bereits unmittelbar nach dem Zeitpunkt der Umschaltung des Einschaltventils 176 aus der Sperrstellung in die Freigabestellung eine Umschaltung der Sicherheitsventile 51 und 52 aus der ersten Funktionsstellung (Sperrstellung) in die zweite Funktionsstellung (Freigabestellung) vorgenommen werden kann, sofern entsprechende Steuersignale von der Sicherheitsteuerung 6 vorliegen.

Sobald die Umschaltung der Sicherheitsventile 51, 52 in die zweite Funktionsstellung erfolgt ist, wird die über die Drossel 172 bereitgestellte Druckluft an die Versorgungsleitung 42 weitergeleitet und kann somit als Steuerluft und als Arbeitsluft für die beiden Ventilscheiben 101 und 102 verwendet werden.

Durch den hierbei stattfindenden Druckaufbau in der Versorgungsleitung 42 wird die Druckwaage 173, die über die Rückführleitung 175 fluidisch kommunizierend mit der Versorgungsleitung 42 verbunden ist, aus einer Sperrstellung gemäß der Figur 3 in eine nicht dargestellte Freigabestellung überführt kann, wodurch der volle Druck der Druckluftquelle 37 an die Ventilanordnung 1 zur Verfügung gestellt werden wird.

Durch die Wirkung des Drosselventils 171 werden somit bei einem Startvorgang für die Ventilanordnung 1 unerwünscht harte Umschaltvorgänge für die Ventilanordnung 1 und unerwünscht harte Bewegungsvorgänge für die daran angeschlossenen Druckluftverbraucher 30 zumindest weitgehend vermieden.

Eine Funktionsweise der Ventilanordnung 1 gemäß der Darstellung der Figur 3 nach Durchführung des vorstehend beschriebenen Startvorgangs kann wie folgt beschrieben werden: um eine Druckluftversorgung für den ersten Druckluftverbraucher 30 und/oder für den zweiten Druckluftverbraucher 31 zu ermöglichen, ist beispielsweise vorgesehen, dass die übergeordnete Steuerung 32 hierauf gerichtete Ansteuersignale an die Ventilsteuerung 5 bereitgestellt. Die Ventilsteuerung 5 stellt über die Versorgungsleitung 35 ein elektrisches Steuersignal an die Sicherheitssteuerung 6 zur Verfügung.

Daraufhin prüft die Sicherheitssteuerung 6, ob eventuell Voraussetzungen vorliegen, die eine Überführung der beiden Sicherheitsventile 51, 52 aus der ersten Funktionsstellung in die zweite Funktionsstellung verhindern. Beispielhaft wäre eine solche Voraussetzung gegeben, wenn der Sicherheitssensor 99 am Sicherheitszaun 100 ein Signal an die Sicherheitssteuerung 6 bereitstellt, aus dem hervorgeht, dass die Sicherheitstür im Sicherheitszaun 100 geöffnet ist, wie dies rein exemplarisch in der Darstellung der Figur 3 gezeigt ist. Eine weitere Voraussetzung wäre gegeben, wenn zumindest einer der beiden Stellungssensoren 78, 79 der Sicherheitsventile 51, 52 ein Signal an die Sicherheitssteuerung bereitstellt, aus dem hervorgeht, dass wenigstens eines der Sicherheitsventile 51, 52 nicht in die erste Funktionsstellung zurückgekehrt ist.

Sofern keine der vorgenannten Voraussetzungen vorliegt, kann die Sicherheitssteuerung 6 eine elektrische Ansteuerung der Vorsteuerventile 60, 61 der Sicherheitsventile 51, 52 vornehmen, sodass beide Sicherheitsventile 51, 52 aus der ersten Funktionsstellung gemäß der Figur 3 in eine nicht dargestellte zweite Funktionsstellung überführt werden. In dieser zweiten Funktionsstellung erfolgt über den ersten Eingangsanschluss 66 und den zweiten Ausgangsanschluss 69 des ersten Sicherheitsventils 51 sowie über den ersten Eingangsanschluss 71 und den zweiten Ausgangsanschluss 74 eine Bereitstellung von Druckluft von der Druckluftquelle 37 über die Versorgungsleitung 42 an das erste Schaltventil 103 der ersten Ventilscheibe 101 und an das zweite Schaltventil 104 der zweiten Ventilscheibe 102. Diese beiden Schaltventile 103 und 104 können anschließend von der Ventilsteuerung 5 in Abhängigkeit vom Bedarf des jeweiligen Druckluftverbrauchers 30, 31 geschaltet werden.

Sollte während dieses regulären Betriebs der Ventilanordnung 1 ein sicherheitsgerichtetes Sensorsignal an die Sicherheitssteuerung 6 bereitgestellt werden, was bei der Ausführungsform der Figur 3 ausschließlich durch den Sicherheitssensor 99 erfolgen kann, jedoch bei einer praktischen Applikation auch durch weitere Sensoren oder Nothaltschalter der Fall sein kann, führt die Sicherheitssteuerung 6 eine Notabschaltung für die Ventilanordnung 1 und die damit verbundenen Druckluftverbraucher 30, 31 durch. Hierzu werden die von der Sicherheitsteuerung 6 bereitgestellten Ansteuersignale für die beiden Vorsteuerventile 60, 61 der Sicherheitsventile 51, 52 derart geändert, insbesondere abgeschaltet, dass keine weitere Zufuhr von Steuerluft an die jeweiligen Hauptventile 62, 63 vorliegt. Hierdurch wird eine Umschaltung der Sicherheitsventile 51, 52 aus der zweiten Funktionsstellung in die erste Funktionsstellung bezweckt.

Für den Fall, dass beide Sicherheitsventile 51, 52 tatsächlich die erste Funktionsstellung gemäß der Figur 3 einnehmen, findet eine Entlüftung der Versorgungsleitung 42 statt, wobei sowohl die Arbeitsluft als auch die Steuerluft für die beiden Schaltventile 103, 104 der Ventilscheiben 101 und 102 entlüftet wird.

Sofern das erste Sicherheitsventil 51 aufgrund einer Fehlfunktion in der nicht dargestellten zweiten Funktionsposition verbleiben sollte, was als erster Fehlerfall anzusehen ist, wird dennoch durch die Umschaltung des zweiten Sicherheitsventils 52 aus der nicht dargestellten zweiten Funktionsposition in die erste Funktionsposition gemäß der Figur 3 die Entlüftung der beiden Ventilscheiben 101 und 102 gewährleistet. Hierbei strömt die Druckluft aus der Versorgungsleitung 42 über den zweiten Ausgangsanschluss 74 des zweiten Sicherheitsventils 52 zu den beiden Luftauslässen 39 und 40. Ferner wird ebenfalls durch das zweite Sicherheitsventil 52 die fluidisch kommunizierende Verbindung zwischen der Druckluftquelle 37 und den beiden Ventilscheiben 101 und 102 blockiert.

Sofern das zweite Sicherheitsventil 52 aufgrund einer Fehlfunktion in der nicht dargestellten zweiten Funktionsposition verbleiben sollte, was ebenfalls als erster Fehlerfall anzusehen ist, wird dennoch durch die Umschaltung des ersten Sicherheitsventils 51 aus der nicht dargestellten zweiten Funktionsposition in die erste Funktionsposition gemäß der Figur 3 die Entlüftung der beiden Ventilscheiben 101 und 102 gewährleistet. Hierbei strömt die Druckluft über den zweiten Ausgangsanschluss 74 des zweiten Sicherheitsventils 102 zum ersten Eingangsanschluss 71 des zweiten Sicherheitsventils und von dort über die Verbindungsleitungen 41 zum zweiten Ausgangsanschluss 69 des ersten Sicherheitsventils 51, um von dort zum zweiten Eingangsanschluss 67 des ersten Sicherheitsventils 51 zu strömen und anschließend an den beiden Luftauslässen 39 und 40 in die Umgebung abzuströmen.

In der Figur 4 ist die fluidische Verschaltung der zweiten Ventilanordnung 81 gemäß der Figur 2 gezeigt, die sich von der fluidischen Verschaltung der ersten Ventilanordnung 1 gemäß der Figur 1 dadurch unterscheidet, dass das Drosselventil 171 ausschließlich für die Arbeitsluftversorgung der Ventilanordnung 81 genutzt wird, während die Steuerluftversorgung der Vorsteuerventile 60, 61 über die Steuerluftleitung 177 erfolgt, die von einer Steuerluftquelle 174 versorgt wird, die unabhängig von der Druckluftquelle 37 und vom Drosselventil 171 ausgebildet ist. Eine Zufuhr von Steuerluft für die Vorsteuerventile 105, 106 kann beispielsweise über eine Steuerluft-Zwischeneinspeisung 181 vorgenommen werden.

## Patentansprüche

1. Ventilanordnung (1; 81; 91) zur Bereitstellung von Druckluft an Druckluftverbraucher (30, 31), mit mehreren längs einer Aufreihungsrichtung (2) aneinander gereihten Funktionsmodulen aus der Gruppe: Ventilscheibengruppe (8), Sicherheitsventilgruppe (7), Drosselventil (171), wobei die Ventilscheibengruppe (8) eine oder mehrere Ventilscheiben (101, 102) umfasst und wobei jede Ventilscheibe (101, 102) wenigstens ein elektrisch ansteuerbares Ventil (103, 104) aufweist, das mit einem elektrischen Versorgungsstrang (17), der die Ventilscheibengruppe (8) durchsetzt, und mit einem Fluidversorgungsstrang (18), der die Ventilscheibengruppe (8) durchsetzt, verbunden ist, wobei das Drosselventil (171) stromauf vor der Sicherheitsventilgruppe (7) zwischen einem Fluidanschluss (36) und dem Fluidversorgungsstrang (18) der Ventilscheibengruppe (8) angeordnet ist, wobei die Sicherheitsventilgruppe (7) ein erstes Sicherheitsventil (51) und ein zweites Sicherheitsventil (52) aufweist, die jeweils zur Beeinflussung eines Fluidstroms zwischen dem Fluidanschluss (36) und dem Fluidversorgungsstrang (18) ausgebildet sind, wobei eine elektrisch zwischen einer Ventilsteuerung (5) und der Sicherheitsventilgruppe (7) angeordnete Sicherheitssteuerung (6) für eine sicherheitsgerichtete Blockierung von elektrischen Ansteuersignalen für das erste Sicherheitsventil (51) und das zweite Sicherheitsventil (52) ausgebildet ist, wobei das Drosselventil (171) für eine zeitweilige Reduzierung eines Arbeitsdrucks im Fluidversorgungsstrang (18) ausgebildet ist, und wobei die Ventilsteuerung (5) für eine elektrische Ansteuerung der Ventilscheibengruppe (8) und der Sicherheitsventilgruppe (7) ausgebildet ist.

2. Ventilanordnung (1; 81; 91) nach Anspruch 1, **dadurch gekennzeichnet, dass** der Fluidversorgungsstrang (18) einen Arbeitsluftkanal (18) umfasst, dass das Drosselventil (171) für eine zeitweilige Reduzierung eines Arbeitsdrucks im Arbeitsluftkanal (18) ausgebildet ist und dass das erste Sicherheitsventil (51) und das zweite Sicherheitsventil (52) für eine redundante Beeinflussung eines Fluidstroms im Arbeitsluftkanal (18), insbesondere für eine Blockierung einer fluidisch kommunizierenden Verbindung zwischen dem Fluidanschluss (36) und dem Arbeitsluftkanal (18) sowie für eine Entlüftung des Arbeitsluftkanals (18), ausgebildet sind.

3. Ventilanordnung (1; 81; 91) nach Anspruch 2, **dadurch gekennzeichnet, dass** eine Ventilscheibe (101, 102) der Ventilscheibengruppe (8) als Direktsteuerventilscheibe mit einem elektrisch ansteuerbaren Hauptventil ausgebildet ist, wobei das Hauptventil fluidisch mit dem Arbeitsluftkanal (18) verbunden ist und elektrisch über den elektrischen Versorgungsstrang (17) mit der Ventilsteuerung (5) verbunden ist.

4. Ventilanordnung (1; 81; 91) nach Anspruch 2 oder 3, **dadurch gekennzeichnet, dass** der Fluidversorgungsstrang (18) einen Steuerluftkanal (19) umfasst und dass das erste Sicherheitsventil (51) und das zweite Sicherheitsventil (52) für eine redundante Beeinflussung eines Fluidstroms im Steuerluftkanal (19), insbesondere für eine Blockierung einer fluidisch kommunizierenden Verbindung zwischen dem Fluidanschluss (36) und dem Steuerluftkanal (19) sowie für eine Entlüftung des Steuerluftkanals (19) ausgebildet sind.

5. Ventilanordnung (1; 81; 91) nach Anspruch 4, **dadurch gekennzeichnet, dass** eine Ventilscheibe (101, 102) der Ventilscheibengruppe (8) als Vorsteuerventilscheibe ausgebildet ist, die ein elektrisch ansteuerbares Vorsteuerventil (105, 106) aufweist, das über den elektrischen Versorgungsstrang (17) elektrisch mit der Ventilsteuerung (5) verbunden ist und das fluidisch mit dem Steuerluftkanal (19) des Fluidversorgungsstrangs (18) verbunden ist, und dass die Vorsteuerventilscheibe (101, 102) ein fluidisch vorgesteuertes Hauptventil (107, 108) aufweist, das fluidisch mit dem Vorsteuerventil (105, 106) und mit dem Arbeitsluftkanal (18) verbunden ist.

6. Ventilanordnung (1; 81; 91) nach Anspruch 5, **dadurch gekennzeichnet, dass** das Drosselventil (171) für eine zeitweilige Reduzierung eines Steuerdrucks im Steuerluftkanal (19) ausgebildet ist.

7. Ventilanordnung (1; 81; 91) nach einem der Ansprüche 2 bis 6, **dadurch gekennzeichnet, dass** zwischen der Sicherheitsventilgruppe und der Ventilscheibengruppe eine Sperrscheibe angeordnet ist, die für eine Blockierung des Arbeitsluftkanals zwischen der Sicherheitsventilgruppe und der Ventilscheibengruppe ausgebildet ist und die einen Arbeitsluftanschluss aufweist, der für eine Einspeisung von Arbeitsluft in den Arbeitsluftkanal der Ventilscheibengruppe ausgebildet ist.

8. Ventilanordnung (1; 81; 91) nach einem der Ansprüche 4, 5 oder 6, **dadurch gekennzeichnet, dass** zwischen der Sicherheitsventilgruppe (7) und der Ventilscheibengruppe (8) eine Sperrscheibe (82) angeordnet ist, die für eine Blockierung des Steuerluftkanals (19) zwischen der Sicherheitsventilgruppe (7) und der Ventilscheibengruppe (8) ausgebildet ist und die einen Steuerluftanschluss (83) aufweist, der für eine Einspeisung von Steuerluft in den Steuerluftkanal (19) der Ventilscheibengruppe (8) ausgebildet ist.

9. Ventilanordnung (1; 81; 91) nach einem der Ansprüche 1 bis 8, **dadurch gekennzeichnet, dass** das erste Sicherheitsventil (51) und/oder das zweite Sicherheitsventil (52) ein elektrisch mit der Sicherheitsteuerung (6) und fluidisch mit dem Fluidanschluss (36) verbundenes Sicherheitshauptventil aufweist und dass die Sicherheitssteuerung für eine elektrische Ansteuerung des Sicherheitshauptventils ausgebildet ist.

10. Ventilanordnung (1; 81; 91) nach einem der Ansprüche 1 bis 8, **dadurch gekennzeichnet, dass** das erste Sicherheitsventil (51) und/oder das zweite Sicherheitsventil (52) ein elektrisch mit der Sicherheitssteuerung (6) und fluidisch mit dem Fluidanschluss (36) verbundenes Sicherheitsvorsteuerventil (60, 61) und ein fluidisch mit dem Sicherheitsvorsteuerventil (60, 61) und fluidisch mit dem Fluidanschluss (36) verbundenes Sicherheitshauptventil (62, 63) aufweist, wobei die Sicherheitssteuerung (6) für eine elektrische Ansteuerung des Sicherheitsvorsteuerventils (60, 61) ausgebildet ist und wobei das Sicherheitsvorsteuerventil (60, 61) für eine fluidische Ansteuerung des Sicherheitshauptventils (62, 63) ausgebildet ist.

11. Ventilanordnung (1; 81; 91) nach Anspruch 9, **dadurch gekennzeichnet, dass** das Drosselventil (171) einen Eingangsanschluss (178) zur Verbindung mit dem Fluidanschluss (36) und einen Steuerluftausgang aufweist, der zur Verbindung mit einem Steuerlufteingang der Sicherheitsventilgruppe (7) ausgebildet ist.

12. Ventilanordnung (1; 81; 91) nach einem der vorhergehenden Ansprüche, **dadurch gekennzeichnet, dass** das erste Sicherheitsventil (51) und/oder das zweite Sicherheitsventil (52) mit einem Stellungssensor (78, 79) ausgerüstet ist, der zur Erfassung einer Ventilstellung ausgebildet ist und der elektrisch mit der Sicherheitssteuerung (6) verbunden ist.

## Claims

1. Valve assembly (1; 81; 91) for supplying compressed air to compressed-air consumers (30, 31), comprising a plurality of functional modules arranged in a row along a row direction (2) from the group: valve assembly (8), safety valve assembly (7), throttle valve (171), wherein the valve assembly (8) comprises one or more valve modules (101, 102) and wherein each valve module (101, 102) comprises at least one electrically controllable valve (103, 104) that is connected with an electrical supply line (17) passing through the valve assembly (8) and with a fluid supply line (18) passing through the valve assembly (8), wherein the throttle valve (171) is arranged upstream of the safety valve assembly (7) between a fluid connection (36) and the fluid supply line (18) of the valve assembly (8), wherein the safety valve assembly (7) comprises a first safety valve (51) and a second safety valve (52), each of which is configured to influence a fluid flow between the fluid connection (36) and the fluid supply line (18), wherein a safety control unit (6) is electrically connected between a valve control unit (5) and the safety valve assembly (7) and is configured to provide a safety-oriented blocking of electrical drive signals for the first safety valve (51) and the second safety valve (52), wherein the throttle valve (171) is configured to temporarily reduce a working pressure in the fluid supply line (18), and wherein the valve controller (5) is configured to electrically control the valve assembly (8) and the safety valve assembly (7).

2. Valve assembly (1; 81; 91) according to claim 1, **characterized in that** the fluid supply line (18) comprises a working air channel (18), **in that** the throttle valve (171) is configured to temporarily reduce a working pressure in the working air channel (18), and **in that** the first safety valve (51) and the second safety valve (52) are configured to redundantly control a fluid flow in the working air channel (18), in particular to block a fluidically communicating connection between the fluid connection (36) and the working air channel (18), as well as to vent the working air channel (18).

3. Valve assembly (1; 81; 91) according to claim 2, **characterized in that** a valve module (101, 102) of the valve assembly (8) is configured as a direct-acting valve with an electrically actuated main valve, wherein the main valve is fluidically connected to the working air channel (18) and is electrically connected to the valve control (5) via the electrical supply line (17).

4. Valve assembly (1; 81; 91) according to claim 2 or 3, **characterized in that** the fluid supply line (18) comprises a control air channel (19) and **in that** the first safety valve (51) and the second safety valve (52) are provided for redundantly influencing a fluid flow in the control air channel (19), in particular for blocking a fluidically communicating connection between the fluid port (36) and the control air channel (19) as well as for venting the control air channel (19).

5. Valve assembly (1; 81; 91) according to claim 4, **characterized in that** a valve module (101, 102) of the valve assembly (8) is configured as a pilot valve, which comprises an electrically actuated pilot valve (105, 106) that is electrically connected to the valve control (5) via the electrical supply line (17) and is fluidically connected to the control air channel (19) of the fluid supply line (18), and that the pilot valve module (101, 102) includes a fluidically piloted main valve (107, 108), which is fluidically connected to the pilot valve (105, 106) and to the working air channel (18).

6. Valve assembly (1; 81; 91) according to claim 5, **characterized in that** the throttle valve (171) is designed to temporarily reduce a control pressure in the control air channel (19).

7. Valve assembly (1; 81; 91) according to any one of claims 2 through 6, **characterized in that** a shut-off disc is arranged between the safety valve assembly and the valve assembly, which is configured to block the working air channel between the safety valve assembly and the valve assembly and which has a working air connection configured to supply working air to the working air channel of the valve assembly.

8. Valve assembly (1; 81; 91) according to any one of claims 4, 5, or 6, **characterized in that** a shut-off disc (82) is arranged between the safety valve assembly (7) and the valve assembly (8), which is configured to block the control air channel (19) between the safety valve assembly (7) and the valve assembly (8), and which has a control air connection (83) designed to supply control air to the control air channel (19) of the valve assembly (8).

9. Valve assembly (1; 81; 91) according to any one of claims 1 through 8, **characterized in that** the first safety valve (51) and/or the second safety valve (52) comprises a main safety valve electrically connected to the safety control unit (6) and fluidically connected to the fluid port (36), and **in that** the safety control unit is configured to electrically actuate the main safety valve.

10. Valve assembly (1; 81; 91) according to any one of claims 1 through 8, **characterized in that** the first safety valve (51) and/or the second safety valve (52) comprises a safety pilot valve (60, 61) and a main safety valve (62, 63) connected fluidically to the safety pilot valve (60, 61) and fluidically to the fluid connection (36), wherein the safety control unit (6) is configured for electrical actuation of the safety pilot valve (60, 61) and wherein the safety pilot valve (60, 61) is configured for fluidic actuation of the main safety valve (62, 63).

11. Valve assembly (1; 81; 91) according to claim 9, **characterized in that** the throttle valve (171) has an inlet port (178) for connection to the fluid port (36) and a control air outlet configured for connection to a control air inlet of the safety valve assembly (7).

12. Valve assembly (1; 81; 91) according to one of the preceding claims, **characterized in that** the first safety valve (51) and/or the second safety valve (52) is equipped with a position sensor (78, 79) that is configured to detect a valve position and is electrically connected to the safety control unit (6).

## Revendications

1. Ensemble de soupapes (1 ; 81 ; 91) pour la fourniture d'air comprimé à des consommateurs d'air comprimé (30, 31), avec plusieurs modules fonctionnels alignés le long d'une direction d'alignement (2) du groupe : groupe de disques de soupape (8), groupe de soupapes de sécurité (7), soupape d'étranglement (171), dans lequel le groupe de disques de soupape (8) comprend un ou plusieurs disques de soupape (101, 102) et dans lequel chaque disque de soupape (101, 102) présente au moins une soupape (103, 104) à commande électrique qui est reliée à une ligne d'alimentation électrique (17) qui traverse le groupe de disques de soupape (8), et avec une ligne d'alimentation en fluide (18) qui traverse le groupe de disques de soupape (8), dans lequel la soupape d'étranglement (171) est disposée en amont du groupe de soupapes de sécurité (7) entre un raccord de fluide (36) et la ligne d'alimentation en fluide (18) du groupe de disques de soupape (8), dans lequel le groupe de soupapes de sécurité (7) présente une première soupape de sécurité (51) et une seconde soupape de sécurité (52) qui sont respectivement réalisées pour influencer un flux de fluide entre le raccord de fluide (36) et la ligne d'alimentation en fluide (18), dans lequel une commande de sécurité (6) disposée électriquement entre une commande de soupape (5) et le groupe de soupapes de sécurité (7) est réalisée pour un blocage orienté sécurité de signaux de commande électriques pour la première soupape de sécurité (51) et la seconde soupape de sécurité (52), dans lequel la soupape d'étranglement (171) est réalisée pour une réduction temporaire d'une pression de travail dans la ligne d'alimentation en fluide (18), et dans lequel la commande de soupape (5) est réalisée pour une commande électrique du groupe de disques de soupape (8) et du groupe de soupapes de sécurité (7).

2. Ensemble de soupapes (1 ; 81 ; 91) selon la revendication 1, **caractérisé en ce que** la ligne d'alimentation en fluide (18) comprend un conduit d'air de travail (18), que la soupape d'étranglement (171) est réalisée pour une réduction temporaire d'une pression de travail dans le conduit d'air de travail (18) et que la première soupape de sécurité (51) et la seconde soupape de sécurité (52) sont réalisées pour une influence redondante d'un flux de fluide dans le conduit d'air de travail (18), en particulier pour un blocage d'une liaison de communication fluidique entre le raccord de fluide (36) et le conduit d'air de travail (18) ainsi que pour une purge du conduit d'air de travail (18).

3. Ensemble de soupapes (1 ; 81 ; 91) selon la revendication 2, **caractérisé en ce qu'**un disque de soupape (101, 102) du groupe de disques de soupape (8) est réalisé en tant que disque de soupape de commande directe avec une soupape principale à commande électrique, dans lequel la soupape principale est reliée fluidiquement au conduit d'air de travail (18) et est reliée électriquement à la commande de soupape (5) par le biais de la ligne d'alimentation électrique (17).

4. Ensemble de soupapes (1 ; 81 ; 91) selon la revendication 2 ou 3, **caractérisé en ce que** la ligne d'alimentation en fluide (18) comprend un conduit d'air de commande (19) et que la première soupape de sécurité (51) et la seconde soupape de sécurité (52) sont réalisées pour une influence redondante d'un flux de fluide dans le conduit d'air de commande (19), en particulier pour un blocage d'une liaison de communication fluidique entre le raccord de fluide (36) et le conduit d'air de commande (19) ainsi que pour une purge du conduit d'air de commande (19).

5. Ensemble de soupapes (1 ; 81 ; 91) selon la revendication 4, **caractérisé en ce qu'**un disque de soupape (101, 102) du groupe de disques de soupape (8) est réalisé en tant que disque de soupape pilote, qui présente une soupape pilote (105, 106) à commande électrique qui est reliée électriquement à la commande de soupape (5) par le biais de la ligne d'alimentation électrique (17) et qui est reliée fluidiquement au conduit d'air de commande (19) de la ligne d'alimentation en fluide (18), et que le disque de soupape pilote (101, 102) présente une soupape principale (107, 108) pilotée fluidiquement, qui est reliée fluidiquement à la soupape pilote (105, 106) et au conduit d'air de travail (18).

6. Ensemble de soupapes (1 ; 81 ; 91) selon la revendication 5, **caractérisé en ce que** la soupape d'étranglement (171) est réalisée pour une réduction temporaire d'une pression de commande dans le conduit d'air de commande (19).

7. Ensemble de soupapes (1 ; 81 ; 91) selon l'une quelconque des revendications 2 à 6, **caractérisé en ce qu'**une rondelle d'arrêt est disposée entre le groupe de soupapes de sécurité et le groupe de disques de soupapes, qui est réalisée pour un blocage du conduit d'air de travail entre le groupe de soupapes de sécurité et le groupe de disques de soupapes et qui présente un raccord d'air de travail qui est réalisé pour une injection d'air de travail dans le conduit d'air de travail du groupe de disques de soupapes.

8. Ensemble de soupapes (1 ; 81 ; 91) selon l'une quelconque des revendications 4, 5 ou 6, **caractérisé en ce qu'**une rondelle d'arrêt (82) est disposée entre le groupe de soupapes de sécurité (7) et le groupe de disques de soupapes (8), qui est réalisée pour un blocage du conduit d'air de commande (19) entre le groupe de soupapes de sécurité (7) et le groupe de disques de soupapes (8) et qui présente un raccord d'air de commande (83) qui est réalisé pour une injection d'air de commande dans le conduit d'air de commande (19) du groupe de disques de soupapes (8).

9. Ensemble de soupapes (1 ; 81 ; 91) selon l'une quelconque des revendications 1 à 8, **caractérisé en ce que** la première soupape de sécurité (51) et/ou la seconde soupape de sécurité (52) présentent une soupape principale de sécurité reliée électriquement à la commande de sécurité (6) et fluidiquement au raccord de fluide (36) et que la commande de sécurité est réalisée pour une commande électrique de la soupape principale de sécurité.

10. Ensemble de soupapes (1 ; 81 ; 91) selon l'une quelconque des revendications 1 à 8, **caractérisé en ce que** la première soupape de sécurité (51) et/ou la seconde soupape de sécurité (52) présentent une soupape pilote de sécurité (60, 61) reliée électriquement à la commande de sécurité (6) et fluidiquement au raccord de fluide (36) et une soupape principale de sécurité (62, 63) reliée fluidiquement à la soupape pilote de sécurité (60, 61) et fluidiquement au raccord de fluide (36), dans lequel la commande de sécurité (6) est réalisée pour une commande électrique de la soupape pilote de sécurité (60, 61) et dans lequel la soupape pilote de sécurité (60, 61) est réalisée pour une commande fluidique de la soupape principale de sécurité (62, 63).

11. Ensemble de soupapes (1 ; 81 ; 91) selon la revendication 9, **caractérisé en ce que** la soupape d'étranglement (171) présente un raccord d'entrée (178) pour la liaison au raccord de fluide (36) et une sortie d'air de commande qui est réalisée pour la liaison à une entrée d'air de commande du groupe de soupapes de sécurité (7).

12. Ensemble de soupapes (1 ; 81 ; 91) selon l'une quelconque des revendications précédentes, **caractérisé en ce que** la première soupape de sécurité (51) et/ou la seconde soupape de sécurité (52) est équipée d'un capteur de position (78, 79), qui est réalisé pour détecter une position de soupape et qui est relié électriquement à la commande de sécurité (6).
